# DEMANDE DE BREVET EUROPEEN

(11) **EP 3 315 810 A1**
(43) Date de publication de la demande: **02.05.2018**
(21) Numéro de dépôt: 17197486.8
(22) Date de dépôt: 20.10.2017
(51) Int. Cl.: F16D 55/226, F16B 21/04

(54) **ETRIER DE FREIN DE VEHICULE COMPRENANT UNE LIAISON DE TYPE A BAÏONNETTE ENTRE UN ACTIONNEUR ET UN CORPS D'ETRIER**

(30) Priorité: 25.10.2016 FR 1660319
(71) Demandeur: Foundation Brakes France, 93700 Drancy (FR)
(72) Inventeur: BOURLON, Philippe, 77230 DAMMARTIN EN GOELE (FR)
(74) Mandataire: Brevalex

(57) **Abrégé**

L'invention concerne un étrier (2) de frein à disque pour véhicule. L'étrier (2) comprend un corps d'étrier (20) et un actionneur électromécanique de frein fixé au corps d'étrier (20). L'étrier (2) comprend des moyens de liaison de type à baïonnette (5) de l'actionneur au corps d'étrier (20) pour fixer l'actionneur au corps d'étrier (20).

## Description

### DOMAINE TECHNIQUE

L'invention se rapporte aux freins pour véhicule. Plus précisément, elle concerne la liaison mécanique entre un actionneur électromécanique et un corps d'étrier de frein à disque.

### ÉTAT DE LA TECHNIQUE ANTÉRIEURE

Des véhicules automobiles sont équipés de frein à disque. Chaque frein à disque comprend un étrier et des patins qui sont destinés à enserrer le disque solidaire du moyeu d'une roue du véhicule.

L'étrier comprend un corps d'étrier et un actionneur électromécanique qui est fixé au corps d'étrier par plusieurs vis.

Il existe un besoin pour simplifier la fixation de l'actionneur sur le corps d'étrier, tout en limitant l'encombrement de l'étrier. L'invention vise à satisfaire ce besoin.

### EXPOSÉ DE L'INVENTION

À cet égard, l'invention a pour objet un étrier de frein à disque pour véhicule. L'étrier comprend un corps d'étrier et un actionneur électromécanique de frein, fixé au corps d'étrier.

Selon l'invention, l'étrier comprend des moyens de liaison de type à baïonnette de l'actionneur au corps d'étrier pour raccorder mécaniquement l'actionneur au corps d'étrier.

Les moyens de liaison de type à baïonnette permettent de faciliter la fixation de l'actionneur sur le corps d'étrier. Ils offrent l'avantage de limiter l'encombrement de l'étrier, en supprimant des vis dans la région de fixation de l'actionneur au corps d'étrier.

De préférence, l'étrier comprend des moyens de blocage en rotation du corps d'étrier relativement à l'actionneur.

De préférence, les moyens de blocage en rotation comprennent une vis s'engageant dans un trou de l'actionneur et se vissant dans un trou fileté du corps d'étrier, ces trous étant espacés d'un axe de rotation des moyens de liaison de type à baïonnette.

De préférence, l'actionneur électromécanique comprend un moteur et un dispositif de transmission, les moyens de liaison de type à baïonnette étant configurés pour raccorder mécaniquement un carter du dispositif de transmission au corps d'étrier.

De préférence, les moyens de liaison de type à baïonnette comprennent :
au moins une dent dépassant radialement d'une surface latérale interne de l'actionneur en direction de l'axe de rotation des moyens de liaison de type à baïonnette, et
au moins une encoche formée autour d'une portion cylindrique de corps d'étrier, chaque dent s'engageant dans une encoche correspondante.

De préférence, les moyens de liaison de type à baïonnette comprennent un anneau ayant une surface externe cylindrique comprenant au moins une encoche, l'anneau étant fixé au corps d'étrier.

De préférence, l'anneau est fixé au corps d'étrier par montage en force autour d'une portion cylindrique de corps d'étrier.

De préférence, le corps d'étrier comprend :
une surface plane sur laquelle un carter de l'actionneur est en appui, et
une portion cylindrique dépassant de la surface plane, assurant un centrage de l'actionneur sur le corps d'étrier.

De préférence, le corps d'étrier comprend un cylindre de logement d'un piston de frein, le cylindre de logement du piston étant délimité vers l'amont par la surface plane et la portion cylindrique.

De préférence, l'étrier comprend au moins un arbre d'entrainement d'un piston de frein qui est coaxial avec l'axe de rotation des moyens de liaison de type à baïonnette.

L'invention concerne également un frein à disque comprenant un étrier tel que défini ci-dessus et un procédé de fabrication de l'étrier.

Le procédé de fabrication comprend une étape d'assemblage de l'actionneur au corps d'étrier, l'actionneur étant fixé au corps d'étrier par les moyens de liaison de type à baïonnette.

### BRÈVE DESCRIPTION DES DESSINS

La présente invention sera mieux comprise à la lecture de la description d'exemples de réalisation, en référence aux dessins annexés sur lesquels :
- la figure 1 est une représentation en perspective d'un étrier de frein pour véhicule, selon un mode de réalisation préféré de l'invention ;
- la figure 2 est une représentation en perspective du corps d'étrier et de l'anneau de fixation à baïonnette de l'étrier selon le mode de réalisation préféré;
- la figure 3 est une représentation en perspective de l'actionneur de l'étrier selon le mode de réalisation préféré;
- la figure 4 est une représentation en perspective de l'anneau de fixation à baïonnette de l'étrier selon le mode de réalisation préféré ;
- la figure 5 illustre l'assemblage de l'actionneur au corps d'étrier, au sein de l'actionneur selon le mode de réalisation préféré.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

L'idée à la base de l'invention est d'assurer le montage d'un actionneur 3 sur un corps d'étrier 20 au moyen d'une liaison de type à baïonnette, c'est-à-dire avec laquelle l'actionneur 3 engage le corps d'étrier 20 selon un premier mouvement de translation, puis selon un second mouvement de rotation autour de l'axe de translation pour bloquer en translation l'actionneur 3 par rapport au corps d'étrier 20.

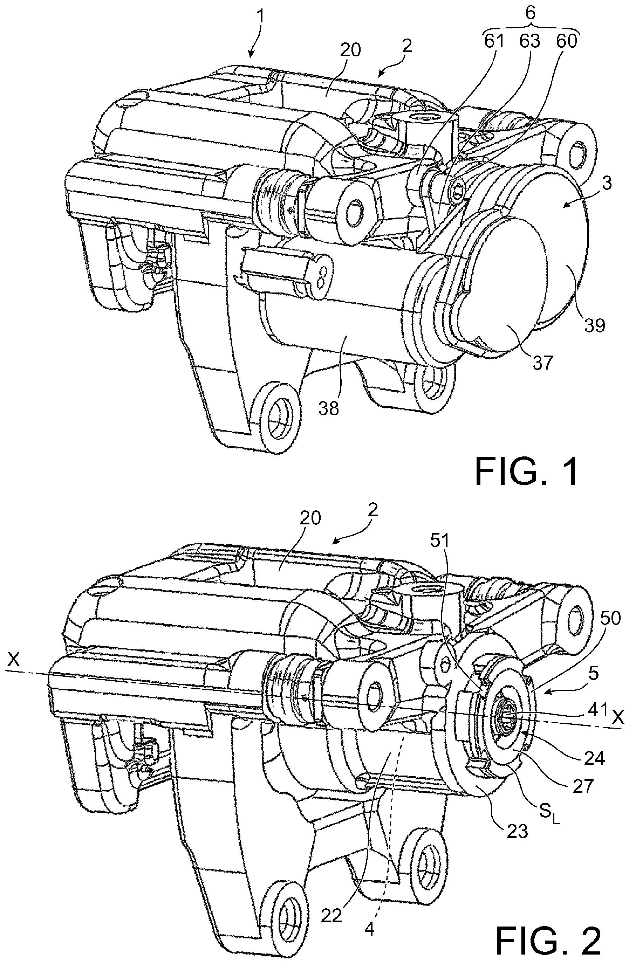

La figure 1 représente un frein 1 à disque d'une roue de véhicule. Le frein 1 comprend un étrier 2 et deux patins (non représentés) qui sont destinés à enserrer un disque (non représenté) rigidement solidaire du moyeu de la roue (non représentée), pour la freiner. Le frein 1 est un frein électromécanique utilisé notamment lors du stationnement du véhicule.

L'étrier 2 comprend un corps 20, un piston 4 de frein et un actionneur électromécanique 3. L'étrier 2 est de type flottant.

Le corps 20 loge le piston dans un cylindre 22 de logement du piston. Le piston 4 est mobile en translation par rapport au corps 20 d'étrier, selon une direction de déplacement du piston X-X, sous l'effet de l'actionneur 3. Le déplacement du piston 4 selon la direction axiale X-X permet de rapprocher les patins l'un de l'autre pour freiner la roue.

Dans la suite de l'exposé, une direction axiale est une direction parallèle à la direction de déplacement du piston X-X. une direction circonférentielle est une direction autour de cette axe et une direction radiale est une direction orthogonale à cet axe. Le terme « aval » correspond au sens de déplacement du piston 4, pourfreiner la roue. Le terme « amont » se réfère au sens opposé du terme aval selon la direction axiale X-X.

En référence à la figure 2, le cylindre de logement du piston 22 est délimité vers l'amont par une surface plane d'appui 23 et par un fût cylindrique 24 qui dépasse de la surface plane d'appui 23 vers l'amont et qui est situé sensiblement au centre de la surface plane d'appui 23.

La surface plane d'appui 23 est sensiblement orthogonale à la direction de déplacement du piston X-X. Elle prend la forme d'un disque qui entoure le fût 24.

Le fût 24 est cylindrique. Il est centré sur la direction de déplacement du piston X-X qui forme une génératrice du fût 24. La surface d'appui plane 23 et le fût 24 sont concentriques autour de l'axe de déplacement du piston X-X.

Le fût 24 présente une face latérale externe présentant une surface externe cylindrique S_{L} sensiblement lisse. Il loge en son centre un arbre d'entrée 41 du piston qui forme un partie femelle d'accouplement et qui dépasse partiellement du fût 24 vers l'amont.

Le fût 24 présente également une surface amont 27 en forme de disque qui est sensiblement parallèle à la surface plane d'appui 23.

Une partie de l'actionneur 3 vient entourer le fût 24, lorsqu'il est raccordé au corps d'étrier 20. Le fût 24 facilite le centrage de l'actionneur 3 sur le corps d'étrier 20 et l'accouplement de l'arbre d'entrée 41 avec l'actionneur 3.

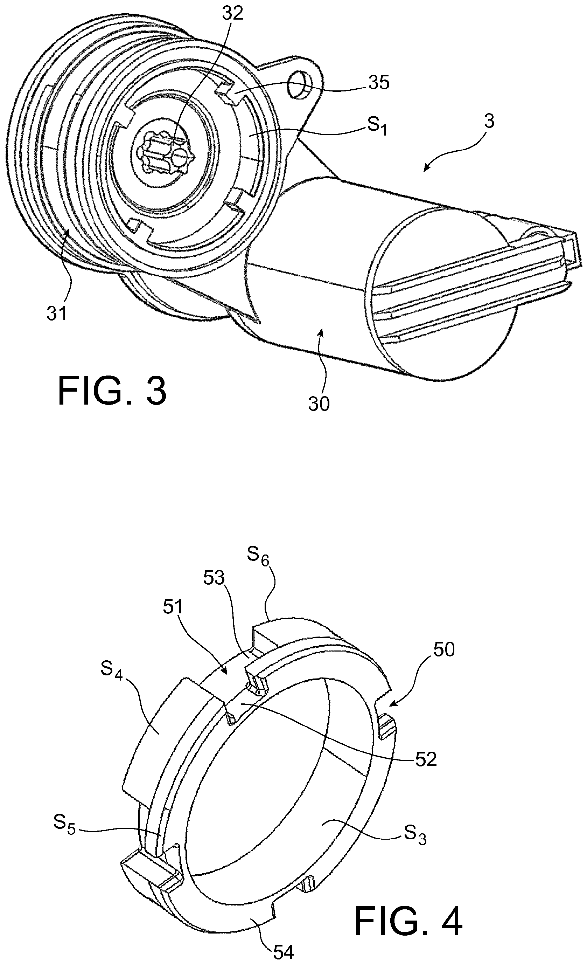

En référence conjointes aux figures 1 à 3, l'actionneur électromécanique 3 comprend un moteur 30 et un dispositif de transmission 31.

Le moteur 30 est configuré pour entraîner le dispositif de transmission 31 pour qu'il déplace le piston 4 selon la direction axiale X-X.

Le dispositif de transmission 31 comprend un arbre de sortie 32 qui est destiné à être accouplé à l'arbre d'entrée 41, en étant coaxial avec la direction de déplacement du piston X-X.

L'arbre de sortie 32 forme une partie mâle d'accouplement destinée à s'accoupler avec l'arbre d'entrée 41 du piston.

L'actionneur 3 comprend un carter 38 pour loger le moteur 30 et un carter 39 pour loger le dispositif de transmission 31. Le carter de moteur 38 et le carter 39 du dispositif de transmission forment conjointement un carter 37 de l'actionneur.

Le carter 39 du dispositif de transmission a une forme cylindrique. Il comporte un pourtour interne cylindrique délimité par une surface interne S₁ qui est centrée autour de l'axe de l'arbre de sortie 32.

La surface interne S₁ comporte une pluralité de dents 35, au nombre de quatre dans le mode de réalisation représenté, qui sont réparties uniformément sur la longueur circonférentielle de la surface interne S₁.

Les dents 35 sont en saillie radiale vers l'axe de déplacement du piston X-X, lorsque l'actionneur 3 est raccordé mécaniquement au corps d'étrier 20.

Le carter du dispositif de transmission 39 est destiné à venir autour du fût cylindrique 24 du corps d'étrier 20, de façon à ce que l'arbre de sortie 32 soit accouplé avec l'arbre d'entrée 41, et que les dents 35 soient engagées dans des encoches 51 situées autour du fût 24.

Afin de faciliter le raccordement de l'actionneur 3 au corps d'étrier 20, et de limiter l'encombrement de l'étrier 2 dans la région de fixation de l'actionneur 3 au corps d'étrier 20, l'étrier 2 comporte des moyens de liaison de type à baïonnette 5 de l'actionneur 3 au corps d'étrier 20.

En référence conjointe aux figures 2 à 4, les moyens de liaison de type à baïonnette 5 comportent les dents 35 du carter 37 du dispositif de transmission et un anneau de fixation à baïonnette 50.

L'anneau de fixation 50 a une forme de couronne cylindrique. Il comprend un bord circonférentiel 54 dans lequel sont ménagés des encoches 51.

Le bord circonférentiel 54 est délimité radialement par une surface circonférentielle interne S₃ et une surface circonférentielle externe S₄ opposée à la surface circonférentielle interne S₃.

La surface circonférentielle interne S₃ est destinée à être au contact de la surface latérale S_{L} du fût cylindrique. La surface circonférentielle externe S₄ comprend les encoches 51.

Le bord circonférentiel est délimité selon la direction axiale X-X par une face d'appui extérieure S₅ et une face d'appui intérieure S₆.

La face d'appui intérieure S₆ est destinée à venir au contact de la surface plane d'appui 23.

L'anneau de fixation 50 est fixé au corps d'étrier 20, en étant monté en force autour du fût 24.

Les encoches 51 sont en forme de L. Elles comprennent chacune une cavité amont 52 et un renfoncement aval 53 qui débouche dans la cavité 52.

Chaque renfoncement aval 53 présente une longueur circonférentielle plus importante que celle de la cavité correspondante 52. Chaque cavité 52 débouche au niveau de la face d'appui extérieure S₅ et chaque renfoncement 53 débouche au niveau de la face d'appui intérieure S₆.

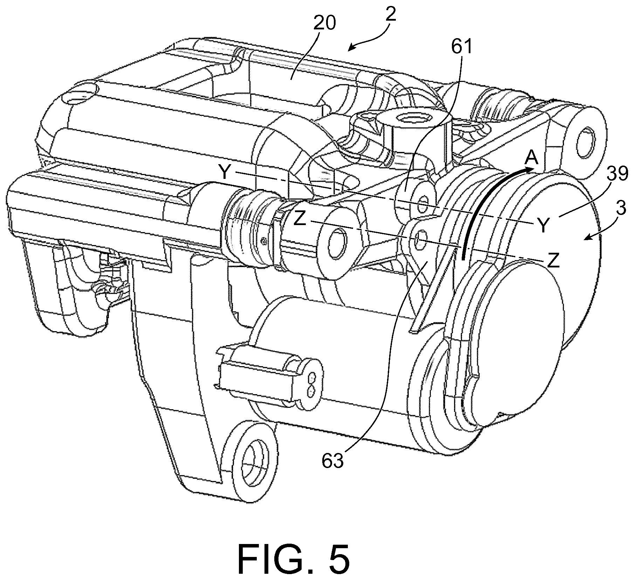

Les moyens de liaison de type à baïonnette 5 sont conçus pour raccorder l'actionneur électromécanique 3 au corps d'étrier 20 selon les opérations suivantes :
- un mouvement de translation axiale de l'actionneur 3 relativement au corps d'étrier 20, pour que les dents 35 s'insèrent dans les encoches 51, au niveau des cavités 52 puis des renfoncements 53, et que l'arbre de sortie 32 s'accouple à l'arbre d'entrée 41,
- un mouvement de rotation de l'actionneur relativement au corps d'étrier 20 autour de l'axe de déplacement du piston X-X selon la direction de la flèche A représentée à la figure 5, jusqu'à ce que les dents 35 soient bloquées en translation axiale dans les encoches 51, au niveau des renfoncements 53.

Les moyens de liaison de type à baïonnette 5 permettent donc d'immobiliser axialement l'actionneur 3 relativement au corps d'étrier 20.

En référence conjointe aux figures 1 et 5, l'étrier 2 comporte également des moyens de blocage en rotation 6 de l'actionneur 3 relativement au corps d'étrier 20. Les moyens de blocage en rotation 6 comprennent une vis 60, une oreille 61 solidaire du corps d'étrier 20 et une oreille 63 solidaire de l'actionneur 3.

L'oreille 61 du corps d'étrier 20 est traversée par un trou qui est orienté selon un axe Y-Y qui est parallèle à l'axe de déplacement X-X du piston, en étant décalé de l'axe de déplacement X-X du piston. Le trou de l'oreille 61 du corps d'étrier est fileté.

L'oreille 63 de l'actionneur est également traversée par un trou qui est destiné à venir en regard de celui de l'oreille 61 du corps d'étrier.

La vis 60 est insérée dans les trous des oreilles 61 et 63, le filet de la vis coopérant avec le filet du trou de l'oreille 61 du corps d'étrier. La vis 60 et au moins une des deux oreilles 61, 63 forment de ce fait des moyens de serrage de l'actionneur 3 relativement au corps d'étrier 20. Ces moyens de serrage empêchent une rotation des dents 35 dans les renfoncements 53 correspondants.

Les moyens de liaison de type à baïonnette 5 et les moyens de blocage en rotation 6 assurent de ce fait conjointement la fixation de l'actionneur 3 au corps d'étrier 20.

La fixation de l'actionneur 3 au corps d'étrier 20 est expliquée en référence conjointe aux figures 1 et 6.

L'actionneur 3 est déplacé en translation relativement au corps d'étrier 20 selon une direction Z-Z strictement parallèle à la direction de déplacement du piston X-X, de manière à ce que l'arbre de sortie 32 vienne engager l'arbre d'entrée 41 du piston, et que les dents 35 du carter de transmission 39 s'insèrent dans les encoches 51.

L'actionneur 3 est déplacé en rotation selon la flèche A autour de l'axe de déplacement du piston X-X, jusqu'à ce que les dents 35 soient bloquées selon la direction de l'axe de déplacement du piston X-X en translation dans les renfoncements 53 par le bord circonférentiel 54 de l'anneau 50.

L'oreille 63 de l'actionneur est amenée en regard de l'oreille 61 du corps d'étrier 20, lorsque l'actionneur 3 se déplace en rotation selon la flèche A autour de la direction axiale.

Lorsque le trou de l'oreille 61 du corps d'étrier est en regard du trou de l'oreille 63 du corps d'actionneur, la vis 60 est vissée dans ces trous. L'actionneur 3 est fixé au corps d'étrier 20.

Pour retirer l'actionneur 3 du corps d'étrier 20, la vis 60 est retirée des oreilles 61, 63. L'actionneur 3 est déplacé en rotation autour de la direction axiale dans un sens opposé à celui de la flèche A, jusqu'à ce que les dents 35 soient en regard des cavités 52 de l'anneau de fixation 50.

L'actionneur 3 est ensuite déplacé axialement selon la direction Z-Z, jusqu'à ce que les dents 35 soient retirées des encoches 51 et que l'arbre de sortie 32 ne soit plus accouplé à l'arbre d'entrée du piston 41.

Bien entendu, diverses modifications peuvent être apportées par à l'invention qui vient d'être décrite ci-dessus.

En particulier, le nombre de dents 35, le nombre d'encoches 51, leur forme et leur répartition peuvent varier.

Selon un mode de réalisation (non représenté), l'étrier 2 est dépourvu d'anneau de fixation à baïonnette 50. Dans ce cas, la surface latérale S_{L} du fût cylindrique 24 comprend les encoches 51. Ces encoches 51 sont réalisées par usinage de la surface latérale S_{L} du fût 24.

Selon un autre mode de réalisation (non représenté), la surface interne S₁ du carter d'actionneur 39 comprend des encoches destinées à coopérer avec des dents solidaires du corps d'étrier 20 et en saillie radialement vers l'extérieur de l'axe de déplacement X-X du piston.

Le trou 63 de l'oreille de l'actionneur peut également être fileté.

Le trou de l'oreille 61 de l'étrier peut être un trou borgne. Par ailleurs, les moyens de blocage en rotation 6 peuvent être dépourvus d'oreille 61, 63.

Dans le mode de réalisation représenté, la direction de l'arbre d'entrée 41 est confondue avec la direction de déplacement du piston X-X. Néanmoins, la direction de déplacement du piston X-X peut être décalée et parallèle à la direction de l'arbre d'entrée 41.

### NOMENCLATURE EN REFERENCE AUX FIGURES

1 : frein à disque
2 : étrier de frein
3 : actionneur électromécanique
4 : piston
5 : moyens de liaison de type à baïonnette
6 : moyens de blocage en rotation
20 : corps d'étrier
22 : cylindre de logement du piston
23 : surface plane d'appui
24 : fût cylindrique
27 : surface amont
30 : moteur
31 : dispositif de transmission
32 : arbre de sortie de l'actionneur
35 : dent
37 : carter de l'actionneur
38 : carter du moteur
39 : carter du dispositif de transmission 41 : arbre d'entrée du piston
50 : anneau de fixation à baïonnette
51 : encoche
52 : cavité
53 : renfoncement
54 : bord circonférentiel
60 : vis
61 : oreille de l'étrier
63 : oreille de l'actionneur
S_{L} : surface latérale
S₁ : surface interne du carter d'actionneur
S₃ : surface interne de l'anneau
S₄ : surface externe de l'anneau
S₅ : face d'appui extérieure
S₆ : face d'appui intérieure
X-X : direction de l'axe de l'arbre de déplacement du piston
Y-Y : direction de l'axe des moyens de serrage
Z-Z : direction de déplacement de l'actionneur relativement au corps d'étrier

## Revendications

1. Étrier (2) de frein à disque pour véhicule, comprenant :
un corps d'étrier (20),
un actionneur électromécanique (3) de frein, fixé au corps d'étrier (20),
**caractérisé en ce qu'**il comprend des moyens de liaison de type à baïonnette (5) de l'actionneur (3) au corps d'étrier (20) pour raccorder mécaniquement l'actionneur (3) au corps d'étrier (20).

2. Étrier (2) selon la revendication précédente, comprenant des moyens de blocage en rotation (6) du corps d'étrier (20) relativement à l'actionneur (3).

3. Étrier (2) selon la revendication précédente, dans lequel les moyens de blocage en rotation (6) comprennent une vis (60) s'engageant dans un trou (63) de l'actionneur (3) et se vissant dans un trou fileté (61) du corps d'étrier (20), ces trous (61, 63) étant espacés d'un axe de rotation (X-X) des moyens de liaison de type à baïonnette (5).

4. Étrier (2) selon l'une quelconque des revendications précédentes, dans lequel l'actionneur électromécanique (3) comprend un moteur (30) et un dispositif de transmission (31), les moyens de liaison de type à baïonnette (5) étant configurés pour raccorder mécaniquement un carter (39) du dispositif de transmission au corps d'étrier (20).

5. Étrier (2) selon l'une quelconque des revendications précédentes, dans lequel les moyens de liaison de type à baïonnette (5) comprennent :
au moins une dent (35) dépassant radialement d'une surface latérale interne (Si) de l'actionneur (3) en direction de l'axe de rotation (X-X) des moyens de liaison de type à baïonnette, et
au moins une encoche (51) formée autour d'une portion cylindrique (24) de corps d'étrier (20), chaque dent (35) s'engageant dans une encoche (51) correspondante.

6. Étrier (2) selon l'une quelconque la revendication 5, dans lequel les moyens de liaison de type à baïonnette (5) comprennent un anneau (50) ayant une surface externe cylindrique (S₄) comprenant au moins une encoche (51), l'anneau (50) étant fixé au corps d'étrier (20).

7. Étrier (2) selon la revendication précédente, dans lequel l'anneau (50) est fixé au corps d'étrier (20) par montage en force autour d'une portion cylindrique (24) de corps d'étrier (20).

8. Étrier (2) selon l'une quelconque des revendications précédentes, dans lequel le corps d'étrier (20) comprend :
une surface plane (23) sur laquelle un carter (37) de l'actionneur est en appui, et
une portion cylindrique (24) dépassant de la surface plane (23), assurant un centrage de l'actionneur (3) sur le corps d'étrier (20).

9. Étrier (2) selon la revendication précédente, dans lequel le corps d'étrier (20) comprend un cylindre (22) de logement d'un piston de frein, le cylindre (22) de logement du piston étant délimité vers l'amont par la surface plane (23) et la portion cylindrique (24).

10. Étrier (2) selon l'une quelconque des revendications précédentes, dans lequel l'étrier (2) comprend au moins un arbre (41) d'entrainement d'un piston (4) de frein qui est coaxial avec l'axe de rotation (X-X) des moyens de liaison de type à baïonnette.

11. Frein à disque pour véhicule, comprenant un étrier (2) selon l'une quelconque des revendications précédentes.

12. Procédé de fabrication d'un étrier (2) de frein selon l'une quelconque des revendications 1 à 10 ou d'un frein (1) selon la revendication précédente, comprenant :
une étape d'assemblage de l'actionneur (3) au corps d'étrier (20), dans laquelle l'actionneur est fixé au corps d'étrier (20) par les moyens de liaison de type à baïonnette (5).
